Europäisches Patentamt

**European Patent Office**

Office européen des brevets

(19)

(11) Numéro de publication: **0 147 324**
**A2**

## (12) DEMANDE DE BREVET EUROPEEN

(21) Numéro de dépôt: 84402700.3

(22) Date de dépôt: 21.12.84

(51) Int. Cl.⁴: **B 29 C 47/06**
B 29 C 47/20, B 29 C 47/22

(30) Priorité: 23.12.83 FR 8320719

(43) Date de publication de la demande:
03.07.85 Bulletin 85/27

(84) Etats contractants désignés:
BE DE GB IT NL

(71) Demandeur: COMPAGNIE FRANCAISE DE RAFFINAGE
Société anonyme dite:
5, rue Michel-Ange
F-75781 Paris Cedex 16(FR)

(72) Inventeur: Siard, Michel
2, Route de Cap
76310 Sainte Adresse(FR)

(74) Mandataire: Jolly, Jean-Pierre et al,
Cabinet BROT et JOLLY 83, rue d'Amsterdam
F-75008 Paris(FR)

(54) Tête pour l'extrusion d'une paraison tubulaire à au moins une couche de matière polymère.

(57) L'invention concerne une tête pour l'extrusion d'une paraison tubulaire à au moins une couche de matière polymère.

La paroi latérale externe (75-78) de chacun des anneaux de réglage (74₁ à 74₃) est appliquée de façon étanche sur une surface de portage (62, 62') de forme sphérique complémentaire formée sur au moins une bride annulaire adjacente (64, 64'), tandis que sa paroi latérale interne (76) est libre de tout contact et en ce que les vérins ou vis de réglage (89) associés à chaque anneau de réglage prennent appui sur des moyens de butées (81) qui font saillie latéralement sur ladite paroi latérale externe (75-78) de l'anneau de réglage et qui sont reçus librement dans un dégagement hermétique (83) prévu sur lesdites brides annulaires adjacentes et qui est étanche vis-à-vis de la matière polymère.

## Tête pour l'extrusion d'une paraison tubulaire à au moins une couche de matière polymère.

La présente addition concerne des perfectionnements apportés à la tête de coextrusion faisant l'objet du brevet principal.

Pour mieux comprendre l'objet de la présente addition, on se référera tout d'abord à la figure 1 ci-jointe qui correspond à la figure 2 du brevet principal.

On rappelle que la tête de coextrusion selon le brevet principal est constituée par un empilement d'éléments ou brides annulaires $64_1$ à $64_4$, à parois internes cylindriques centrées sur l'axe de la tête et traversées axialement par un poinçon cylindrique 30 qui définit avec la paroi interne des brides, un canal tubulaire dans lequel peuvent s'écouler les matières polymères qui arrivent par des passages annulaires 84 définis entre des brides adjacentes.

En vue d'éviter une mauvaise répartition de la matière polymère autour du poinçon, résultant de la tendance qu'a la matière à se concentrer de préférence du côté situé en regard du point où la matière débouche dans le canal, il est prévu, selon le brevet principal, de monter dans chacun desdits passages annulaires 84, un anneau de réglage $74_1$ à $74_3$ pourvu d'une paroi latérale interne 76 et d'une paroi latérale externe 78 en forme de zones sphériques concentriques, centrées sur l'axe de la tête et qui sont respectivement en contact glissant avec des surfaces de portage interne et externe 60,62 de formes complémentaires, qui sont respectivement prévues sur deux desdites brides annulaires $64_1$, $64_2$ qui encadrent l'anneau de réglage, de manière à permettre un basculement de l'anneau de réglage autour de son centre, les bords inférieurs desdites parois interne et externe étant reliés par une surface annulaire en biseau 80 fortement inclinée vers l'axe de la tête et vers la sortie.

Le réglage de chaque anneau dans la position qui permet d'obtenir le profil souhaité pour le passage annulaire 84 est réalisé au moyen d'au moins trois vérins ou vis 86 à 89 parallèles à l'axe de la tête, et qui sont introduits, depuis le sommet de la tête, à travers des alésages $90_2$ percés dans les brides annulaires et dans les anneaux de réglage qui sont au-dessus de l'anneau de réglage considéré, lesdits vérins ou vis venant s'appuyer sur un épaulement annulaire horizontal 82 situé à la partie supérieure de l'anneau de réglage.

Ainsi, chaque anneau de réglage se déplace avec jeu entre les deux brides annulaires fixes qui l'encadrent. Mais, compte tenu des conditions de température et de pression qui règnent dans la tête (220°C et 200 bars environ en service), il est très difficile d'assurer une bonne étanchéité entre les pièces mobiles et les pièces fixes, d'une part, en raison des contraintes et déformations d'origine thermique qui se manifestent sur les différentes pièces de la tête, et, d'autre part, en raison des efforts mécaniques exercés par la pression du courant de matière polymère et par les vérins de réglage sur les anneaux de réglage et qui tendent à appliquer fortement ces derniers contre les surfaces de portée externes 62. Il en résulte que les anneaux de réglage se décollent des surfaces de portée internes 60, ce qui fait apparaître un jeu relativement important à ce niveau.

Il est dès lors impossible de définir avec précision les jeux à prévoir entre les pièces mobiles et les pièces fixes car si ces jeux sont trop importants, ils laissent passer la matière entre les anneaux de réglage et les surfaces de portage adjacentes. A chaque étage de la tête, la matière risque alors de s'infiltrer à travers ces jeux jusqu'à l'épaulement 82 de l'anneau de réglage et de là, descendre le long des tiges de vérin 86 à 89 jusqu'à atteindre les anneaux de réglage des étages inférieurs. La matière peut alors se mélanger aux autres courants de matière, avec toutes les conséquences que cela peut entraîner lorsque les matières sont de nature ou de couleurs différentes.

Par contre, si ces jeux sont trop faibles, les anneaux de réglage risquent de se bloquer et de s'opposer ainsi à toute possibilité de réglage précis.

La présente invention vise à remédier à ces inconvénients de la tête de coextrusion selon le brevet principal, en proposant des mesures qui tendent à assurer une excellente étanchéité entre les pièces fixes et les pièces mobiles, tout en éliminant tout risque de blocage du mouvement des anneaux de réglage.

A cet effet, la tête de coextrusion selon la présente addition se caractérise en ce que la paroi latérale externe de chacun des anneaux de réglage est appliquée de façon étanche sur une surface de portage de forme sphérique complémentaire formée sur au moins une bride annulaire adjacente, tandis que sa paroi latérale interne est libre de tout contact et en ce que les vérins ou vis de réglage associés à chaque anneau de réglage prennent appui sur des moyens de butée qui font saillie latéralement sur ladite paroi latérale externe de l'anneau de réglage et qui sont reçus librement dans un dégagement hermétique prévu sur lesdites brides annulaires adjacentes et qui est étanche vis-à-vis de la matière polymère.

Ainsi, les anneaux de réglage ne sont plus compris entre deux pièces fixes, comme s'était le cas pour la tête selon le brevet principal, mais ils ne sont en contact qu'avec la surface de portée externe. La force d'appui qui s'exerce sur eux est la résultante de deux forces qui sont toutes deux dirigées verticalement, vers le bas :

- la force exercée par les vérins ou vis de réglage, qui peuvent être totalement libérés si nécessaire, donnant ainsi à l'anneau de réglage toute la mobilité voulue ;

- la force résultante de la pression de la matière.

L'anneau de réglage est donc fortement appliqué sur la surface de portage, ce qui élimine toute possibilité de fuite de matière par appui insuffisant, vers les vérins de réglage et donc vers les passages d'arrivée des autres matières.

Grâce à son excellente étanchéité, la tête de coextrusion selon l'invention peut être utilisée avec de très bons résultats pour l'extrusion de matières très fluides à leur température d'extrusion, notamment les polyamides.

L'invention sera décrite à présent en détail à propos d'un mode de réalisation particulier, en regard des figures annexées dans lesquelles :

La figure 1 est une vue en coupe par un plan diamétral de la tête de coextrusion selon le brevet principal, et

La figure 2 est une vue en coupe de la tête de coextrusion selon l'invention.

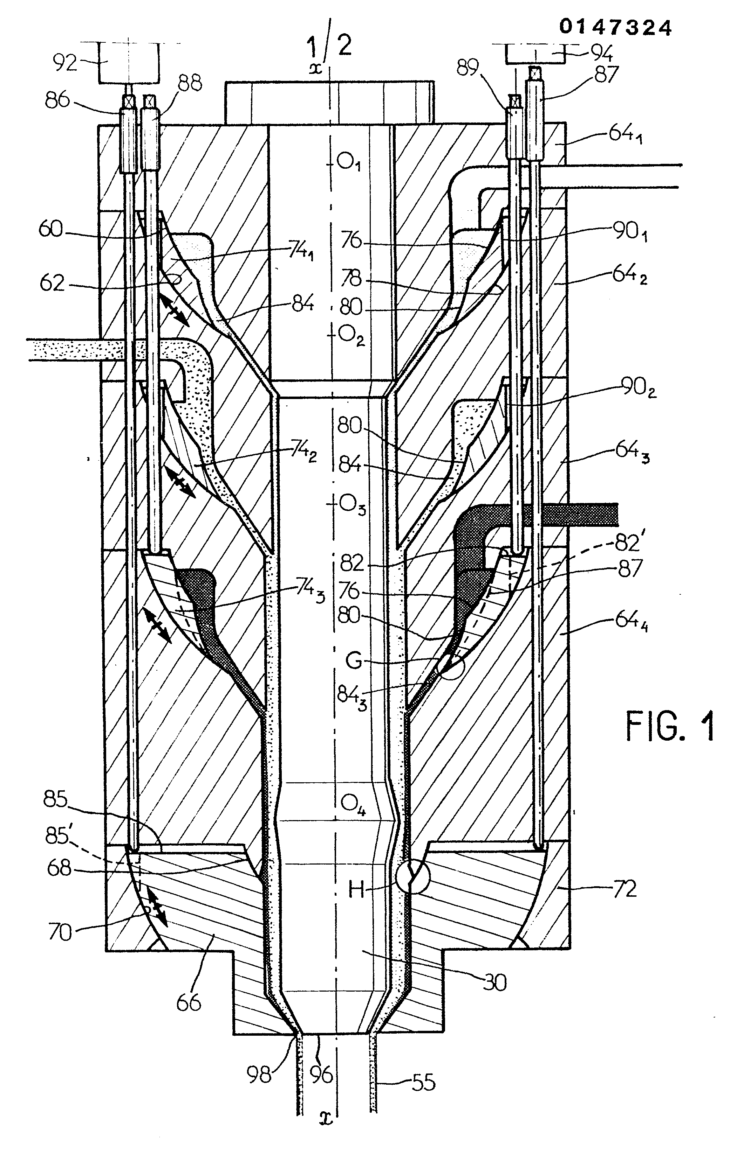

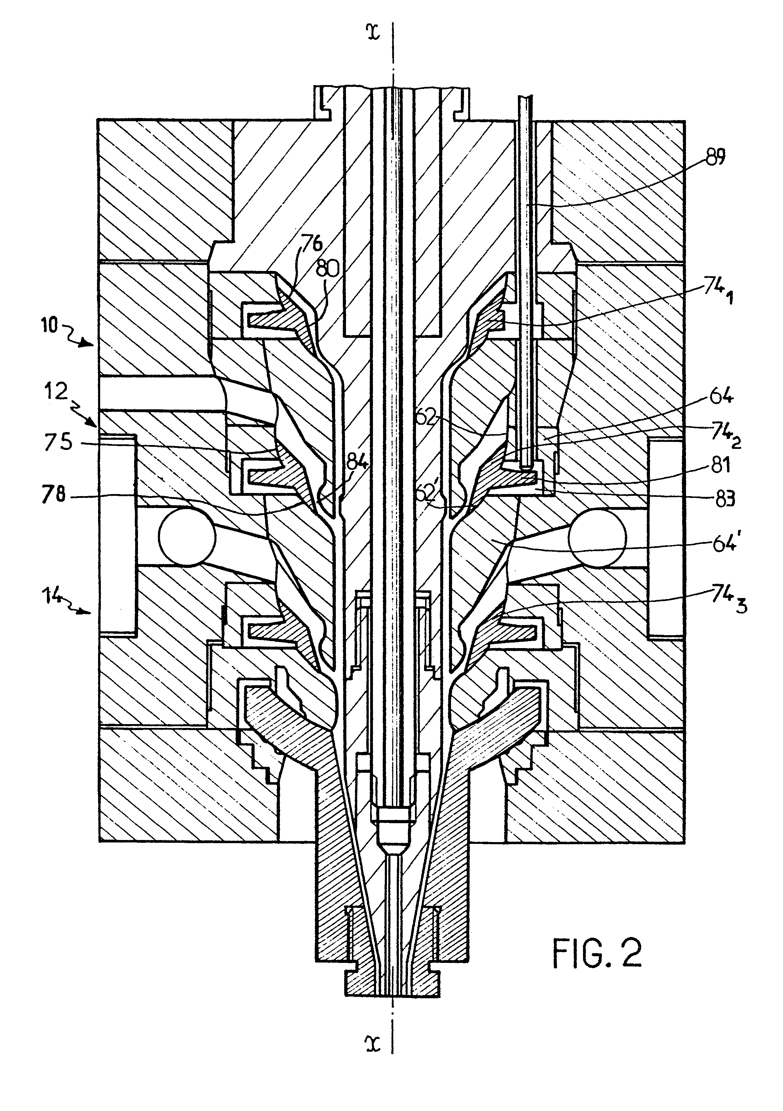

Dans la description qui va suivre de la figure 2, les éléments de la tête de coextrusion porteront les mêmes références que leurs éléments homologues dans la tête de coextrusion du brevet principal représentée à la figure 1. De plus, la description sera strictement limitée aux éléments nécessaires pour la compréhension de l'invention.

Ainsi qu'il ressort de la figure 2, les anneaux de réglage $74_1$ à $74_3$ correspondant respectivement à l'étage supérieur 10, à l'étage moyen 12 et à l'étage inférieur 14 de la tête de coextrusion, comprennent chacun une paroi latérale interne 76, libre de tout contact avec une pièce fixe, et une paroi latérale externe 75-78 en forme de zone sphérique qui s'applique contre des surfaces de portage 62, 62' de forme exactement complémentaire à celle de la paroi 75-78, et qui sont formées sur deux brides annulaires fixes et superposées 64, 64'. Lesdites surfaces de portage appartiennent à une même zone sphérique centrée sur l'axe x-x de la tête de coextrusion et sont fortement inclinées vers la sortie de la tête et vers l'axe x-x.

Chacun des anneaux de réglage présente sur sa paroi latérale externe des moyens d'appui, tels qu'une collerette annulaire 81 située sensiblement à mi-hauteur de l'anneau et s'étendant dans un dégagement annulaire 83 de la bride 64. Sur cette collerette prennent appui les trois vis ou vérins de réglage, dont une seule 89 est représentée sur la figure 2. De façon connue en soi, les anneaux de réglage sont pourvus également d'une paroi interne 80 taillée en biseau, en forme de zone sphérique, conique, torique ou ogivale, qui relie les bords inférieurs des parois latérales interne et externe 76, 78. Cette paroi en biseau 80 se trouve au même niveau qu'une paroi contiguë de la bride fixe adjacente, avec laquelle elle définit un étroit passage annulaire 84.

Le réglage de la tête de coextrusion selon l'invention s'effectuant exactement de la même façon que pour celle selon le brevet principal, il ne sera pas décrit ici.

On notera seulement que les anneaux de réglage $74_1$ à $74_3$ sont énergiquement appliqués contre les surfaces de portage adjacentes 62, 62' sous l'action combinée de la forte pression de la matière et de la force d'appui des vérins 89. Quelle que soit l'inclinaison que peuvent avoir les anneaux de réglage par rapport à l'axe x-x de la tête de coextrusion, on est donc assuré qu'aucune fuite de matière ne pourra se produire ni entre la portion supérieure de la paroi externe 75 et la surface de portage 62, ni entre la portion

6

inférieure de ladite paroi externe 78 et la surface de portage 62'.
Il n'existe donc aucun risque d'infiltration de la matière d'un
étage vers le dégagement voisin 83, et de là, le long des vérins 89,
vers les autres étages.

REVENDICATIONS

1.- Tête pour la coextrusion d'une paraison tubulaire à au moins une couche de matière polymère, selon l'une des revendications du brevet principal, caractérisée en ce que la paroi latérale externe (75-78) de chacun des anneaux de réglage ($74_1$ et $74_3$) est appliquée de façon étanche sur une surface de portage (62, 62') de forme sphérique complémentaire, formée sur au moins une bride annulaire adjacente (64, 64'), tandis que sa paroi latérale interne (76) est libre de tout contact et en ce que les vérins ou vis de réglage (89) associés à chaque anneau de réglage prennent appui sur des moyens de butées (81) qui font saillie latéralement sur ladite paroi latérale externe (75-78) de l'anneau de réglage et qui sont reçus librement dans un dégagement hermétique (83) prévu sur lesdites brides annulaires adjacentes et qui est étanche vis-à-vis de la matière polymère.

2.- Tête de coextrusion selon la revendication 1, caractérisée en ce que ladite collerette (81) est formée sensiblement à mi-hauteur de la paroi latérale externe, les portions (75 et 78) de cette dernière situées de part et d'autre de la collerette étant appliquées respectivement sur deux surfaces de portage (62, 62') en forme de zones sphériques, prévues sur ladite ou lesdites brides annulaires (64, 64'), de part et d'autre du dégagement (83).

FIG. 1

0147324

0147324

FIG. 2